# EUROPEAN PATENT APPLICATION

(11) **EP 1 288 357 A1**
(43) Date of publication of application: **05.03.2003**
(21) Application number: 01118828.1
(22) Date of filing: 10.08.2001
(51) Int. Cl.: D03D 15/00, B29D 30/38, B29C 70/22, B60C 9/00

(54) **Woven cord fabric**

(71) Applicant: MILLIKEN EUROPE N.V., B-9000 Gent (BE)
(72) Inventor: Vangheluwe, Lieven, 9600 Ronse (BE); Broos, Geert, 9070 Destelbergen (BE); Collier, Marc, 9800 Deinze (BE); De Meyer, Willy, 9031 Drongen (BE)
(74) Representative: HOFFMANN - EITLE

(57) **Abstract**

The invention concerns woven cord fabrics, a method of preparing a reinforced rubber product employing said fabrics, and a reinforced rubber product which is obtainable by this method.

The woven cord fabric consisting of warp yarns and weft yarns, characterized in that the weft yarns have a tenacity at 200 °C which is 20 % or less of the tenacity of the weft yarns at 25 °C, the tenacity of the weft yarns at 25 °C being at least 5 cN/tex, and an elongation at break at 25 °C of at least 20 %.

The method of preparing a reinforced rubber product comprises the steps of
(a) applying the rubber composition to a woven fabric according to the present invention,
(b) shaping the thus-treated fabric,
(c) and vulcanising the rubber composition for a time and at a temperature which is sufficient to decrease the tenacity of the weft yarns to 20 % or less with respect to the tenacity of the weft yarns at 25°C.

## Description

### Field of the Invention

The invention concerns woven cord fabrics, a method of preparing a reinforced rubber product employing said woven cord fabrics, and a reinforced rubber product which is obtainable by this method.

### Background of the Invention

Woven cord fabrics are woven fabrics in which reinforcing yarns are used in the warp, the weft being only used to create a fabric in order to be able to process the same. Such cord fabrics are used for producing reinforced rubber products such as tires by applying a rubber composition to the woven fabric, shaping the thus treated fabric and vulcanising the rubber composition to provide the tire.

In order for such tires with a cord web to have good running characteristics and a long useful lifetime, two essential conditions, among others, must be fulfilled: the tires must be very uniform in their shape, and their dimensional stability must remain as great as possible during use, even at increased velocity. It is a pre-requisite for this that the cord fiber frame warp be spread and distributed as uniformly as possible during tire manufacture. However, the weft yarns are often found to oppose uniform spreading of the warp yarn.

Weft yarns are generally composed either of spun (cotton) yarns or polyester or nylon POY filament yarns. Spun (cotton) yarns show the drawback that they usually break due to their low elongation in the formation of the rubber product. This results in a potentially unequal spreading of the cord fibers to cover the surface of the reinforced rubber product.

On the other hand, polyester or nylon POY filament yarns attain very high elongation values through extensive outshrinking. The initial strength required for working-up, as well as sufficient sliding strength and heat resistance can be attained by means of supplementary twisting around of cotton staple yarn. However, these yarns show the disadvantage that their initial strength varies on account of the never entirely uniform twisting around of cotton along its fibers which then later manifests itself negatively through a non-uniform spreading of cord fibers in the tire. A further problem of yarns having a core/sheath structure is that the sheath fibers slide over the core and form thick places on the weft yarn. These thick places are visual in the cord fabric.

Other weft yarns are known in which the sliding strength is achieved by the twisting of a yarn polyester-POY and subsequent heat treatment, as disclosed in EP-A-0 223 301. The weft yarns disclosed in this document are reported to sufficiently withstand the high thermal loading during impregnation, calendering and later working-up into automobile tires.

On the other hand, US 5,817,417 discloses a method for continuous production of a stretchable multifilament weft yarn for tire cord fabric including swirling polyester-POY-filaments with an initial titre of from 170 to 260 dtex by means of a gas having a pressure of from 0.5 to 3 bar in a swirling nozzle, and immediately thereafter, shrinking with an overfeed of from 40 to 80 % at 220 to 240 °C for at least 0.2 seconds. The weft yarn thus obtained is reported to have a rough surface with non-slip properties, a tenacity of greater than 7 cN/tex and an elongation at break of from 170 to 270 %.

In light of this prior art, it is the object underlying the present invention to provide a woven cord fabric which allows a satisfactory splitting or spreading of the cord fibers upon shaping the reinforced rubber product, while permitting an efficient production of reinforced rubber products.

It is another object-of the present invention to provide a corresponding reinforced rubber product and a method for its production.

### Summary of the Invention

The first object of the invention is solved by the provision of a woven cord fabric consisting of warp yarns and weft yarns, characterized in that the weft yarns have a tenacity at 200 °C which is 20 % or less of the tenacity of the weft yarns at 25 °C, the tenacity of the weft yarns at 25 °C being at least 5 cN/tex, and an elongation at break at 25 °C of at least 20 %.

The second object of the invention is solved by a method of preparing a reinforced rubber product, comprising the steps of
(a) applying the rubber composition to a woven fabric according to the present invention,
(b) shaping the thus-treated fabric,
(c) and vulcanising the rubber composition for a time and at a temperature which is sufficient to decrease the tenacity of the weft yarns to 20 % or less with respect to the tenacity of the weft yarns at 25°C to provide a rubber reinforced product;
and by a reinforced rubber product obtainable by this method.

### Detailed Description of the Invention

A cord fabric is a fabric the tensile strength of which in weft direction is significantly lower than the tensile strength in warp direction, usually 20 % or less. Preferably, the tensile strength in weft direction is 10 % or less of the tensile strength in warp direction. The tensile strength of a cord may be determined by taking the cord prior to weaving or by taking the cord out of the woven fabric and performing a tensile test in accordance with ASTM D-2256 for tensile testing of yarns.

Tensile strength, tenacity, both at 25°C and at elevated temperature, and elongation at break are determined at standard conditions. The tension test providing these data is generally carried out according to ASTM D-2256.

According to the present invention, the weft yarns have a tenacity at 200 °C, preferably 170 °C, more preferably 130 °C, which is 20 % or less, preferably 10 % or less with respect to the tenacity of the weft yarns at 25 °C. At 25 °C, the weft yarns have a tenacity of at least 5 cN/tex, preferably a tenacity in the range of 10 to 20 cN/tex.

In a preferred embodiment of the present invention, this loss in tenacity at higher temperatures is the result of a partial and most preferably complete melting of the weft yarn. Thus, the weft yarn has preferably a melting point below 200 °C, more preferably below 170 °C and in a particularly preferred embodiment below 130 °C. The melting point is determined by a standard method which includes observing the sample under the a microscope, equipped with a heated sample holder, while the sample is heated in a controlled way via heating the sample holder.

Weft yarns to be used according to the present invention may be of any material satisfying the above-defined properties with respect to the tenacity decrease at elevated temperature and the elongation at break. They may be monofilament yarns, tapes, multifilament yarns (flat or textured), spun yarns composed of fibers, or core/sheath yarns. The yarns can consist of a single fiber type or of a blend or combination of different fiber types. Useful fibers include polyethylene fibers, polypropylene fibers, fibers of ethylene-propylene copolymers, low-melting nylon fibers, and polyester fibers, and blends or combinations of two or more of these fibers. Polyethylene fibers, polypropylene fibers, fibers of ethylene-propylene copolymers and blends or combinations of these two fiber types are particularly preferred.

The weft yarns used according to the present invention have a preferred thickness of less than 500 dtex, more preferably a thickness of less than 150 dtex.

The weft yarns used for the production of the woven cord fabric of the present invention have an elongation at break at 25 °C of at least 20 %, preferably at least 50 %, more preferably 70 to 300 %.

Warp yarns to be used for the production of the fabric of the present invention are not limited. Useful warp yarns include rayon, polyamides or copolyamides such as PA6, PA66, PA46, polyesters, PEN, aramids, cotton, PVA, PVDF, glass fibers, carbon fibers, steel fibers and others. Preferred warp yarns are polyamides, copolyamides, polyester or rayon, most preferred being polyamides or copolyamides such as PA6, PA66. The thickness of the warp yarns is preferably between 90 and 5000 dtex. The tensile strength of the warp yarn varies and generally depends on the yarn type used. The preferred lower limit of the tensile strength is 500 mN/tex for nylon 6 and nylon 6.6, 350 mN/tex for rayon, and 400 mN/tex for polyester. The preferred value of tenacity of the warp yarn (N/dtex) multiplied by the yarn thickness (dtex) and the number of warp ends per cm of fabric is in the range of 200 to 8000 N/cm.

Before weaving, the warp yarns are preferably pre-treated with a composition to enhance adhesion to the subsequently applied rubber composition. This pre-treatment is preferably effected by dipping the yarn in an RFL-formulation (resorcinol formaldehyde latex). The formulation contains a resorcinol-formaldehyde (RF) condensate. The RF liquid is not limited in its type, and there can be used, for example, a novolac type, a resol type or a mixed type of those. The molar ratio of resorcinol to formaldehyde is preferably 1/1 to 1/3. Latex (e.g. a vinylpyridine latex) is added in a weight ratio of the resorcinol-formaldehyde of typically 4/1 to 15/1. The solid content of the RFL formulation is preferably from 5 to 20 % by weight.

The step of promoting adhesion may also be carried out after weaving by dipping or spraying the adhesion promoting liquid on the woven fabric.

The yarns or fabric may undergo a plasma or corona treatment to promote or enhance their adhesion to the rubber. The plasma or corona treatment can be done prior to or instead of the yarn or fabric dipping operation.

The woven cord fabric of the present invention is produced in a manner known to the skilled in the art, using the weft yarns as defined above. The fabric construction or weave is not limited. Furthermore, there are no restrictions with respect to the loom technology, although shuttleless looms are preferred.

The warp density is preferably in the range of 4000 to 100000 dtex/cm, the warp density being defined by the product of number of ends per cm of warp yarn times the thickness of the warp yarn in dtex.

The weft density is preferably in the range of 0.4 to 5 picks/cm, more preferably 0.8 to 2 picks/cm of warp thread.

Particularly preferred is a woven cord fabric wherein the warp yarn consists of polyamide or copolyamide, the weft yarn is a polyethylene yarn, polypropylene yarn or a yarn consisting of a combination of polypropylene and polyethylene fibers, the tenacity of the weft yarn at 170 °C being 10 % or less of the tenacity of the weft yarns at 25 °C, the tenacity of the weft yarns at 25 °C being at least 5 cN/tex, the tenacity of the warp yarn being in the range of 200 to 8000 N/cm width of the fabric, as determined by multiplying the measured tenacity of the warp yarn by the yarn thickness and the number of warp ends per cm fabric.

The woven cord fabrics of the present invention are preferably used for the production of a reinforced rubber product. The present invention thus also provides a method of preparing a rubber-reinforced product, comprising the steps of
(a) applying the rubber composition to a woven fabric according to the present invention,
(b) shaping the thus-treated fabric,
(c) and vulcanising the rubber composition for a time and at a temperature which is sufficient to decrease the tenacity of the weft yarns to 20 % or less with respect to the tenacity of the weft yarns at 25°C to provide a rubber reinforced product.

The rubber composition used in the present invention are usually complex compositions containing the rubber component itself and additives such as fillers, oils, plasticizers, activators, processing aids and vulcanisation agents such as sulphur or peroxide vulcanization agents.

The rubber component to be used in the method of the present invention is not limited and includes natural rubber, nitrile rubber (NBR), hydrogenated nitrile rubber (hydrogenated NBR), butadiene rubber (BR), isoprene rubber (IR), chlorosulfonic polyethylene (CSM), chloroprene rubber (CR), ethylene-propylene-diene rubber (EPDM), and styrene-butadiene rubber (SBR).

The fillers such as talc, oils, plasticizers, activators, and processing aids which may be included in the rubber composition are known in the art and are not limited.

With respect to the vulcanisation agents, these depend on the rubber component used. Generally, sulfur or peroxides are used for vulcanisation, although some rubber components such as NBR and SBR can be vulcanised without the need of a vulcanisation agent. The vulcanisation agents also contain a vulcanisation activator such as zinc white or stearic acid and optionally a vulcanisation accelerator and an antiscorching agent. The vulcanisation accelerator is preferably selected from sulfonamides, thiurams and thiazoles, and may be used singly or in combination. Antiscorching agents may be selected from the group consisting of organic acids or nitroso compounds, preferably phthalic anhydride, salicyclic acid, benzoic acid, N-nitrosodiphenylamine, N-(cyclohexylthio)-phthalimide, sulphoneamide derivatives, and diphenylurea.

Before treating the woven fabric of the present invention with the rubber composition, the fabric is preferably first treated with a finish or coating to promote adhesion of the fabric to rubber, unless the warp yarn has been treated accordingly before weaving.

According to the present invention, the step of applying the rubber composition to the woven cord fabric may be carried out using any known technique for embedding the fabric in the rubber, such as spraying coating, laminating, coating followed laminating, and calendering. Generally, the embedding is carried out by calendering. It is also possible to tackify one or both surfaces of the fabric by application of a coating which enhances the overall stability of the fabric and/or promotes adhesion of the fabric to the rubber matrix, thereby obviating the need of calendering. The coating substance itself is preferably a liquid equivalent to or compatible to the polymer of the matrix. The coating operation may be performed by means of dipping or spraying the complete fabric. Alternatively, the warp yarns may themselves have been individually treated or coated before their incorporation in the fabric.

The thus treated fabric is then slit into strips or tapes which are then applied to form the product. After applying the strips to form the product, the product is generally shaped in a mould. In this step, the product may also be shaped by inflation. This results in a tension on the weft yarn. According to the present invention, the weft yarn deforms to allow excellent spreading/splitting of the cords in the fabric due to the high elongation of the weft yarn upon shaping.

In the vulcanization step, the rubber composition which was applied to the woven cord fabric of the present invention is generally subjected to a temperature of 100 to 200 °C to provide a reinforced rubber product. The vulcanisation step is carried out for a time and at a temperature which ensures that the tenacity of the weft yarn decreases to less than 20 %, preferably less than 10 % of the tenacity of the weft yarn at 25 °C. The required treatment time and temperature can be determined beforehand by subjecting the weft yarn to corresponding conditions without the application of a rubber composition. Preferred vulcanisation temperatures are in the range of 140 to 200 °C, most preferred is a vulcanisation temperature above the melting temperature of the weft yarn. The duration of said treatment depends on the materials used and the vulcanisation temperature, but is generally in the range of 1 minute to 10 minutes.

The vulcanisation can be carried out in a press, in an autoclave or in a molten salt bath or in any other known vulcanization method.

In a preferred embodiment, the vulcanisation is carried out in the mould used for shaping the product. This allows that the vulcanisation is already initiated in the step of shaping the product. This is not only beneficial in terms of productivity and efficiency of the method of production, as it makes a separate vulcanisation step superfluous, but also because the vulcanisation treatment while shaping further reduces any resistance of the weft yarn with respect to the spreading of the warp yarn.

The present invention also provides a reinforced rubber product which is obtainable by the method of this invention. The reinforced rubber product is preferably a tire, hose, belt, or air spring.

### Example:

Warp yarns (nylon 6.6; 470 dtex, twisted with 200 turns per meter) are heat set in a steam autoclave in a manner known in the art. A fabric is then woven on shuttleless looms, the warp density being 10 ends/cm. The weft yarn, a polypropylene multifilament yarn of 84 dtex, was used at a density of 1 pick/cm.

The woven fabric is subsequently dipped in a standard RFL composition (Resorcinol Formaldehyde Latex) and cured at 140 °C. Through the dipping process, the adhesion of the fabric to rubber is obtained.

The fabric is then calendered with a polybutadiene rubber composition in order to obtain a sheet of fabric with a rubber layer on it. The sheet is slit in tapes. Subsequently, an air spring is built with the tapes via winding of the tapes on a mould. Finally, the product is vulcanized in a press at 180 °C during 5 minutes at a pressure of 70 bar to obtain the vulcanized product.

## Claims

1. Woven cord fabric consisting of warp yarns and weft yarns, **characterized in that** the weft yarns have a tenacity at 200 °C which is 20 % or less of the tenacity of the weft yarns at 25 °C, the tenacity of the weft yarns at 25 °C being at least 5 cN/tex, and an elongation at break at 25 °C of at least 20 %.

2. Fabric according to claim 1, wherein the tenacity of the weft yarn at 170°C is less than 20 % of the respective tenacity at 25°C.

3. Fabric according to claim 1 or 2, wherein the tenacity of the weft yarn at 130°C is less than 20 % of the respective tenacity at 25°C.

4. Fabric according to any of claims 1 to 3, wherein the tenacity of the weft yarn at 200°C, 170° or 130°C, respectively, is less than 10 % of the respective tenacity at 25°C.

5. Fabric according to any of the preceding claims, wherein the thickness of the weft yarn is less than 500 dtex.

6. Fabric according to any of the preceding claims, wherein the thickness of the weft yarn is less than 150 dtex.

7. Fabric according to any of the preceding claims, wherein the density of the weft yarn is 0.5 to 5 picks per cm of warp thread.

8. Fabric according to any of the preceding claims, wherein the weft yarns have a melting point below 200°C.

9. Fabric according to any of the preceding claims, wherein the weft yarns have a melting point below 170°C.

10. Fabric according to any of the preceding claims, wherein the weft yarns have a melting point below 130°C.

11. Fabric according to any of the preceding claims, wherein the weft yarn is a polyethylene, polypropylene or ethylene-propylene copolymer monofilament, or tape, or multifilament yarn (flat or textured); or a yarn in which polyethylene and polypropylene fibers are combined.

12. Fabric according to any of the preceding claims, wherein the warp yarns have been dipped before weaving in order to enhance adhesion to rubber.

13. Fabric according to any of the preceding claims, wherein the warp yarn consists of polyamide or copolyamide, the weft yarn is a polyethylene yarn, polypropylene yarn or a yarn consisting of a combination of polypropylene and polyethylene fibers, the tenacity of the weft yarn at 170 °C being 10 % or less of the tenacity of the weft yarns at 25 °C, the tenacity of the weft yarns at 25 °C being at least 5 cN/tex, the tenacity of the warp yarn being in the range of 200 to 8000 N/cm width of the fabric, as determined by multiplying the measured tenacity of the warp yarn by the tenacity (N/dtex), the yarn thickness (dtex) and the number of warp ends per cm fabric.

14. Method of preparing a reinforced rubber product, comprising the steps of
(a) applying the rubber composition to a woven fabric according to any of claims 1 to 13,
(b) shaping the thus-treated fabric,
(c) and vulcanising the rubber composition for a time and at a temperature which is sufficient to decrease the tenacity of the weft yarns to 20 % or less with respect to the tenacity of the weft yarns at 25°C to provide a rubber reinforced product.

15. Method according to claim 14, wherein the vulcanisation is initiated while shaping the fabric.

16. Method according to claim 14 or 15, additionally comprising the step of treating the woven fabric with a finish or coating to-promote adhesion of the fabric to rubber prior to application of the rubber composition.

17. Reinforced rubber product obtainable according to the method of any of claims 14 to 16.

18. Reinforced rubber product according to claim 17 which is a tire, hose, belt, or air spring.

19. Reinforced rubber product according to claim 18 which is a tire used for bicycles.
